# EUROPÄISCHE PATENTSCHRIFT

(11) **EP 3 732 978 B1**
(45) Veröffentlichungstag und Bekanntmachung des Hinweises auf die Patenterteilung: **06.12.2023**
(21) Anmeldenummer: 20171975.4
(22) Anmeldetag: 29.04.2020
(51) Int. Cl.: A22C 11/10, B65B 9/12

(54) **VERFAHREN UNS VORRICHTUNG ZUM TRENNEN VON WÜRSTEN VON EINEM WURSTSTRANG**
METHOD AND DEVICE FOR SEPARATING SAUSAGES FROM A STRING OF SAUSAGES
PROCÉDÉ ET DISPOSITIF DE SÉPARATION DES SAUCISSES D'UN CHAPELET DE SAUCISSES

(30) Priorität: 30.04.2019 DE 102019111195
(43) Veröffentlichungstag der Anmeldung: 04.11.2020
(73) Patentinhaber: Inotec GmbH Maschinenentwicklung und Vertrieb, 72770 Reutlingen (DE)
(72) Erfinder: DOMLATIL, Miroslav, 72766 Reutlingen (DE)
(74) Vertreter: Patentanwälte und Rechtsanwalt Weiß, Arat & Partner mbB

(56) Entgegenhaltungen:
- EP-A2- 0 239 144
- DE-A1- 4 011 470
- DE-A1-102004 022 716
- DE-C1- 10 120 757
- DE-U1- 29 714 754
- US-B2- 7 322 163

## Beschreibung

Die Erfindung betrifft ein Verfahren zum Trennen von Würsten von einem Wurststrang, an dem einzelne Würste miteinander über eine Verbindung verbunden werden und diese Verbindung durchtrennt wird.

### Stand der Technik

Würste werden heute so hergestellt, dass ein Darm, sei es Natur- oder Kunstdarm, mit dem entsprechenden Wurstbrät in Wurstportionen abgefüllt wird. Zwischen den einzelnen Portionen erfolgt ein Abdrehen des Darms und/oder ein Einsetzen von Clipsen oder eine Abbindung, durch welche die einzelnen Würste voneinander abgeteilt werden. Hierdurch entsteht ein Wurstband, von dem später, beispielsweise zum automatischen Verpacken einer bestimmten Anzahl von Würsten, diese Würste abgeschnitten werden müssen.

Aus der DD 106 131 ist eine Einrichtung zum Trennen von einzelnen Würsten aus einer Wurstkette bekannt, welche aus zwei Förderteilsystemen mit jeweils einem Paar Förderbändern besteht. Durchläuft eine Abdrehung zwischen den Würsten ein Erfassungssystem, so wird ein Trennsystem betätigt und die Abdrehung durchschnitten.

Aus der DE 31 21 432 A1 ist ferner eine Wurstschneidemaschine bekannt, welche einen Sensor aufweist, dessen Strahlungsquelle einen Strahl elektromagnetischer Wellen über den Pfad der Würste hinweg einem Sensor zuführt.

Ferner ist aus der DE 43 07 637 eine Vorrichtung zum Trennen von einzelnen Würsten an einer Schneidstelle mittels eines auf einer Welle eines Motors sitzenden Messers bekannt, wobei der Schneidstelle ein Sensor vorgeschaltet ist. Dieser Sensor ermittelt die sogenannte Abdrehstelle bzw. die Verbindungsstelle zwischen zwei Würsten mittels einem Sensor, der einen Infrarot-Lichtvorhang erzeugt.

In der Praxis gibt es aber eine Vielzahl von Wurstformen, die nicht gleichmässig sind und vor allem sind auch die Verbindungen zwischen zwei Würsten sehr unterschiedlich ausgestaltet ist. Vor allem gibt es auch sehr kurze Abdrehstellen bzw. Verbindungsstellen, so dass es schwierig ist, hier mit einem Trennelement, beispielsweise einem rotierenden Messer zu arbeiten, ohne die Würste zu verletzen.

Die DE 10 2004 022 716 A1 offenbart eine Vorrichtung zum Herstellen von gefüllten, verschlossenen Schlauchbeutelpackungen aus einem gefüllten Schlauch, wobei der gefüllte Schlauch zur Bildung der Enden jeweils zweier aufeinander folgender Schlauchbeutelpackungen gerafft wird und der geraffte Bereich des Schlauchs mit zwei voneinander beabstandeten Clips umschlingend verschlossen wird.

Die DE 101 20 757 C1 offenbart eine Vorrichtung zum Herstellen von mit einem Gut, insbesondere einem Lebensmittel befüllten Schlauchverpackung und weist eine Transporteinrichtung zum Fördern eines mit dem Gut befüllten Schlauchs auf. Zur Herstellung von Schlauchverpackungen ist eine verschließeinrichtung vorgesehen. Die Verschließeinrichtung weist gegeneinander bewegbare Quetschelemente zum Zusammendrücken einer den Schlauch verschließenden Verschlussklammer auf.

Die DE 40 11 470 A1 offenbart eine Maschine zur Herstellung von Beutelverpackungen mit einer Einrichtung zur Bildung eines Schlauchs aus einem Verpackungsmaterialband, mit einer Einrichtung zur kontinuierlichen Führung des Schlauchs nach unten auf eine hohle Spindel, einer Einrichtung zur Zuführung eines fließfähigen Produktes zur Spindel, um das Produkt aus dem unteren Ende der Spindel in den Schlauch einzubringen, und mit einer sich vertikal hin- und herbewegenden Verschlußkopfeinrichtung, durch die der das Produkt enthaltende Schlauch läuft und in der während des Durchlaufes kurze Schlauchstücke aufgefangen und zwischen sich gegenüberstehenden Sätzen von sich horizontal hin- und herbewegenden Halterungsnocken getragenen Fangplatten zusammengedrückt werden, wobei an den kurzen Stücken beabstandete Klammern angebracht und die kurzen Stücke zwischen den Paaren von angebrachten Klammern durch ein sich hin- und herbewegendes Schneidmesser abgeschnitten werden.

Die EP 0 239 144 A2 offenbart eine Abteilvorrichtung beispielsweise zum Abteilen von Einzelwürsten aus einer mit Wurstbrät durchgehend gefüllten Schlauchhülle. Sie weist gegenläufig linear bewegliche Verdränger mit dreiecksförmigen Ausschnitten auf, die die Schlauchhülle zu einem Zopf einschnüren und in diesem Bereich das Füllgut im Schlauch verdrängen.

### Aufgabe

Aufgabe der vorliegenden Erfindung ist es, den Bereich der Verbindung zwischen zwei Würsten zum Abtrennen einer Wurst von einer Wurstkette bzw. einem Wurststrang für dieses Abtrennen besser bereitzustellen.

### Lösung der Aufgabe

Zur Lösung dieser Aufgabe führen die kennzeichnenden Merkmale von Anspruch 1 sowie Anspruch 5

Diese Kulissenwand hat die Aufgabe, die beiden Würste, die voneinander getrennt werden sollen, voneinander zu distanzieren, so dass die Verbindung für den Angriff eines Trennelementes besser bereitgestellt wird. Zu diesem Zweck ist es beispielsweise denkbar, dass die Kulissenwand in ihrem Längsschnitt keilförmig ausgebildet ist, so dass dieser Keil als Spreizkeil zwischen diesen beiden Würsten wirkt. Durch die keilförmige Kulissenwand wird der Abstand der beiden Würste voneinander vergrössert. Das Trennelement, welches natürlich bevorzugt nahe dieser Kulissenwand angeordnet ist, kann dann beispielsweise entlang der Kulissenwand fahren und die Verbindung durchtrennen.

Damit die Kulissenwand das Distanzieren der beiden Würste voneinander bewirken kann, darf sich die Verbindung selbst für die Bewegung der Kulissenwand nicht störend auswirken. Dem wird aus dem Wege gegangen, indem beispielsweise in die Kulissenwand eine entsprechende, beispielsweise schluchtförmige Ausnehmung eingeformt wird, welcher der Aufnahme der Verbindung zwischen den beiden Würsten dient.

Die Anordnung besteht aus zumindest zwei Kulissenwänden, die dann auch einen Spalt miteinander ausbilden, der von dem Trennelement durchfahren werden kann. Diese beiden Kulissenwände sind der Einfachheit halber spiegelbildlich identisch ausgebildet und parallel zueinander angeordnet. Damit sie in geeigneter Weise zwischen die beiden Würste eingeschoben werden können, sollten ihre oberen Spitzen zur Stirnkante hin abgerundet sein. So wird ebenfalls eine Verletzung der Würste vermieden.

Beide Kulissenwände sind nicht parallel zueinander angeordnet, sondern zueinander keilförmig angestellt.

Sollte es notwendig sein, damit ein Messer besser zwischen den beiden Kulissenwänden hindurchgleiten kann, so sind diese Kulissenwände zueinander beweglich. Natürlich kann es hier auch denkbar sein, dass die Kulissenwände von entsprechenden motorischen Einrichtungen auseinanderbewegt werden können, um ein Distanzieren der Würste noch zu vergrössern.

Die Bewegung der einen oder der beiden Kulissenwände erfolgt bevorzugt durch einen einfachen Kurbeltrieb, durch den die Kulissenwand/-wände angehoben und abgesenkt werden können. Bevorzugt ist dieser Kurbeltrieb auch mit dem Trennelement gekoppelt und synchronisiert, so dass das Trennelement im obersten Totpunkt des Kurbeltriebs das Trennen der Verbindung zwischen den beiden Würsten durchführt.

Ferner soll natürlich auch bevorzugt der Kurbeltrieb genau an der Position angehoben werden und zwischen die beiden Würste einfahren, wenn sich diese an der gewünschten Trennstelle im Bereich des Trennelementes befinden. Dies kann beispielsweise durch eine entsprechende Verbindung zwischen dem in der DE 43 07 637 A1 beschriebenen Sensor und dem Kurbeltrieb geschehen. Vom Erfindungsgedanken sollen jedoch auch andere Ausführungsformen umfasst sein.

Die vorliegende Erfindung umfasst auch eine Vorrichtung zum Trennen von Würsten von einem Wurststrang, an dem einzelne Würste miteinander über eine durchtrennbare Verbindung verbunden sind, wobei vor dem Durchtrennen in den Bereich der Verbindung zwischen zwei Würste zumindest eine Kulissenwand einschiebbar ist. Zur Ausgestaltung der Kulissenwand/-wände und der Hubeinrichtung wird auf das oben Ausgeführt Bezug genommen. Als Trennelemente bietet sich vor allem ein drehbares Sichelmesser an, wobei dessen Achse gleichzeitig als ein Teil des Kurbeltriebs dient.

Hervorzuheben ist auch besonders, dass die gesamte Vorrichtung sowohl kontinuierlich arbeiten kann, jedoch ist es auch möglich, im Zeitpunkt des Trennens der beiden Würste voneinander die Transportgeschwindigkeit des Wurststranges auf Null herabzusetzen. In jedem Fall wird ein sehr genaues und schonendes Trennen mit der vorliegenden Erfindung erreicht.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine schematisch dargestellte Draufsicht auf eine erfindungsgemässe Vorrichtung zum Trennen von Würsten von einem Wurststrang;
**Figur 2** einen vergrössert dargestellten Ausschnitt aus einem Längsschnitt durch die Vorrichtung entlang Linie II-II in Figur 1 im Bereich der Verbindung zwischen zwei Würsten;
**Figur 3** einen teilweise dargestellten Längsschnitt durch ein Ausführungsbeispiel eines Trennelementes;
**Figur 4** einen teilweise dargestellten Längsschnitt einer Anordnung von zwei Trennelementen zueinander;
**Figur 5** eine schematisch dargestellte Frontansicht der erfindungsgemässen Vorrichtung gemäss Figur 1;
**Figur 6** die Ansicht gemäss Figur 5 in einer weiteren Gebrauchslage.

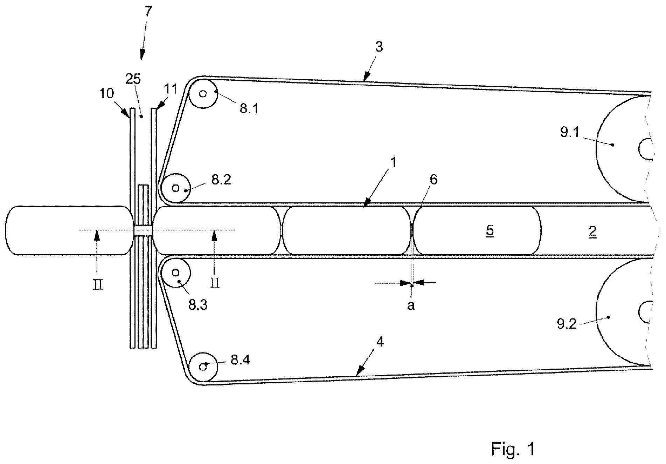

Gemäss Figur 1 befindet sich ein Wurststrang 1 in einem Kanal 2 zwischen zwei Endlosbändern 3 und 4 einer Vorrichtung zum Trennen von Würsten. Dabei besteht der Wurststrang 1 aus einer Mehrzahl von Würsten 5, die über eine Verbindung 6 miteinander verbunden sind. Bei der Verbindung 6 kann es sich um eine beliebige Verbindung handeln, beispielsweise um eine Abdrehstelle, eine Schnur, ein Faden od. dgl.. Diese Verbindung hat in der Regel den Sinn, das Ende der Wurst 5 zu begrenzen bzw. zu verschliessen, so dass beim Durchtrennen dieser Verbindung 6 und damit beim Abtrennen einer Wurst 5 von einem Wurststrang 1 kein Wurstinhalt austreten kann.

Der Wurststrang 1 wird in dem Kanal 2 von den beiden Endlosbändern 3 und 4 in Richtung einer Abtrennstelle 7 geführt, wobei die Endlosbänder 3 und 4 um entsprechende Umlenkrollen 8.1 bis 8.4 sowie Antriebsrollen 9.1 und 9.2 gelegt sind. Die Antriebsrollen 9.1 und 9.2 drehen gegenläufig.

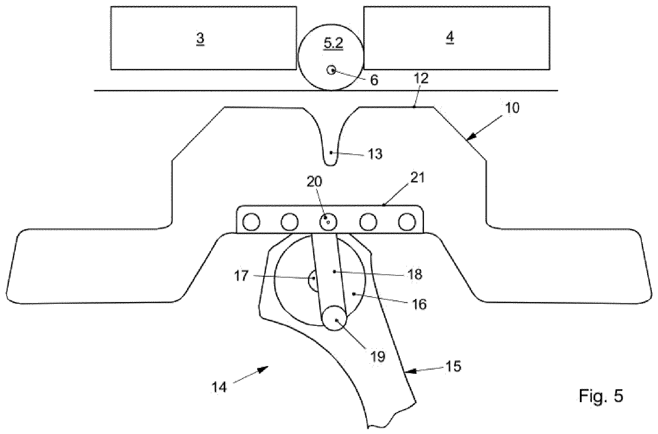

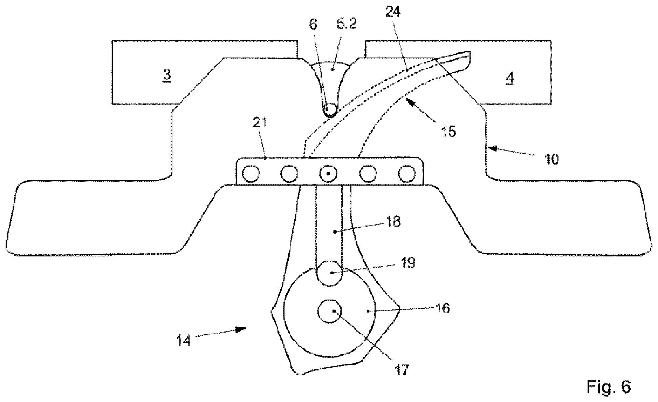

An der Abtrennstelle 7 befinden sich zwei Kulissenwände 10 und 11, die im wesentlichen gleich, jedoch spiegelsymmetrisch ausgebildet sind. Gemäss den Figuren 5 und 6 sind sie schieberartig ausgestaltet und weisen eine Stirnkante 12 auf. In diese Stirnkante 12 ist eine schluchtförmige Ausnehmung 13 eingeformt, welche der Aufnahme der Verbindung 6 beim Trennvorgang dient.

Der Kulissenwand 10 bzw. 11 ist zum Bewegen ein Kurbeltrieb 14 zugeordnet, der auch ein Sichelmesser 15 als Beispiel eines Trennelementes in einem Spalt 25 zwischen den beiden Kulissenwänden 10 und 11 bewegt. Dieses Sichelmesser 15 ist über ein Drehrad 16 mit einer Drehachse 17 ortsfest mit einem nicht näher gezeigten Maschinenrahmen verbunden, wobei an dem Drehrad 16 exzentrisch ein Hebel 18 angeordnet ist. Die exzentrische Gelenkverbindung zwischen Hebel 18 und Drehrad 16 ist mit 19 gekennzeichnet. Andererseits der Gelenkverbindung 19 besitzt der Hebel 18 eine weitere gelenkige Verbindung 20 mit einem Stützstreifen 21, der wiederum die Kulissenwand 10/11 von unten abstützt.

Die Funktionsweise der vorliegenden Erfindung ist folgende und wird insbesondere anhand der Figuren 1, 2 sowie 5 und 6 näher beschrieben:
Wie aus Figur 1 ersichtlich, wird ein Wurststrang 1 mittels der Endlosbänder 3 und 4 einer Abtrennstelle 7 zugeführt. Dabei ist ersichtlich, dass die Verbindung 6 zwischen den einzelnen Würsten sehr kurz und somit ein Abstand a zwischen zwei Würsten sehr klein ist, so dass dies eine Schwierigkeit für das Durchtrennen dieser Verbindung 6 darstellt.

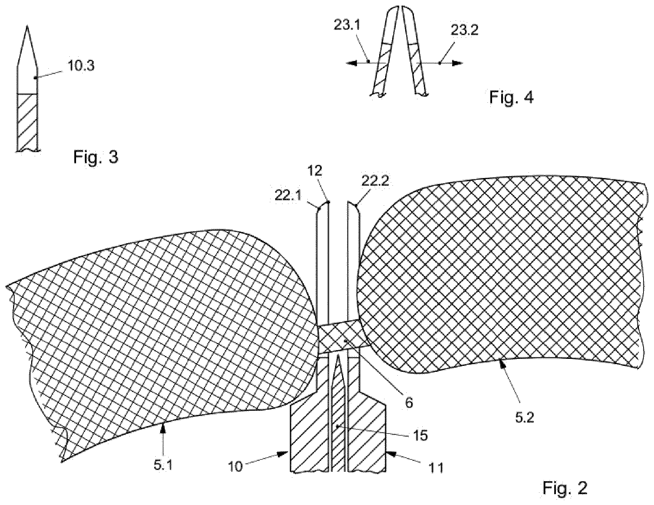

Zur Überwindung dieser Schwierigkeiten ist die erfindungsgemäss ausgestaltete Trennstelle 7 vorgesehen. Bevor der eigentliche Trennvorgang stattfindet, wird zumindest eine Kulissenwand, im vorliegend gezeigten Ausführungsbeispiel jedoch zwei Kulissenwände 10 und 11 zwischen zwei ankommende Würste 5 im Bereich der Verbindung 6 zwischen diese beiden Würste eingeschoben. Zu diesem Zweck ist, sofern nur eine Kulissenwand vorgesehen ist, diese Kulissenwand 10.1 gemäss Figur 3 im Längsschnitt keilförmig ausgebildet, so dass die beiden Würste 5.1 und 5.2 voneinander beabstandet werden und die Verbindung 6, wie in Figur 1 gezeigt, verlängert wird.

Besser geschieht dies allerdings durch zwei Kulissenwände 10 und 11 (Figur 2), wobei dort die Spitzen der Kulissenwände 10 und 11 zur Stirnkante 12 hin mit einer Rundung 22.1 bzw. 22.2 versehen sind, damit die Würste daran entlang gleiten können und nicht verletzt werden.

Beide Kulissenwände 10 und 11 sind keilförmig zueinander angestellt (Figur 4) und, wie durch die Pfeile 23.1 und 23.2 angedeutet, können voneinander wegbewegt werden Wie oben beschrieben, ist der Kurbeltrieb 14 mit dem Sichelmesser 15 so synchronisiert, dass bei Einschieben der Kulissenwand 10 bzw. 11 sich der Hebel 18 in etwa in Vertikalstellung fernab der Drehachse 17 befindet und in diesem Moment das Sichelmesser 15 die Verbindung 6 durchtrennen kann. Gemäss Figur 6 trifft in diesem Moment eine Schneide 24 des Sichelmessers 15 auf die Verbindung 6 und durchtrennt diese. In diesem Augenblick ist es auch möglich, die Transportgeschwindigkeit des Wurststranges 1 durch Steuerung der Endlosbänder 3 und 4 auf Null herabzusetzen.

Zu der vorliegenden Erfindung gehört selbstverständlich auch eine Steuerung des Kurbeltriebs 14, damit dieser zum richtigen Zeitpunkt die Kulissenwände 10 bzw. 11 zwischen die beiden Würste im Bereich der Verbindung der beiden Würste einschiebt und das Sichelmesser 15 seine Tätigkeit vollzieht. Zu diesem Zweck ist erfindungsgemäss eine Überwachung der Verbindungsstelle zwischen zwei Würsten vorgesehen, wie sie in der DE 43 07 637 A1 beschrieben ist. Durch den dort beschriebenen Sensor mit einem Infrarot-Lichtvorhang wird die Verbindungsstelle erfasst und im Zusammenhang mit der Transportgeschwindigkeit ermittelt, wann diese Verbindungsstelle die Trennstelle 7 erreicht.

### Bezugszeichenliste

| | | | | | |
|---|---|---|---|---|---|
| 1 | Wurststrang | 34 | | 67 | |
| 2 | Kanal | 35 | | 68 | |
| 3 | Endlosband | 36 | | 69 | |
| 4 | Endlosband | 37 | | 70 | |
| 5 | Wurst | 38 | | 71 | |
| 6 | Verbindung | 39 | | 72 | |
| 7 | Abtrennstelle | 40 | | 73 | |
| 8 | Umlenkrolle | 41 | | 74 | |
| 9 | Antriebsrolle | 42 | | 75 | |
| 10 | Kulissenwand | 43 | | 76 | |
| 11 | Kulissenwand | 44 | | 77 | |
| 12 | Stirnkante | 45 | | 78 | |
| 13 | Ausnehmung | 46 | | 79 | |
| 14 | Kurbeltrieb | 47 | | | |
| 15 | Sichelmesser | 48 | | a | Abstand |
| 16 | Drehrad | 49 | | | |
| 17 | Drehachse | 50 | | | |
| 18 | Hebel | 51 | | | |
| 19 | Gelenkverbindung | 52 | | | |
| 20 | Gelenkige Verbindung | 53 | | | |
| 21 | Stützstreifen | 54 | | | |
| 22 | Rundung | 55 | | | |
| 23 | Pfeil | 56 | | | |
| 24 | Schneide | 57 | | | |
| 25 | Spalt | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Trennen von Würsten (5) von einem Wurststrang (1), an dem einzelne Würste (5) miteinander über eine Verbindung (6) verbunden werden und diese Verbindung (6) durchtrennt wird,
**dadurch gekennzeichnet,**
**dass** vor dem Durchtrennen in den Bereich der Verbindung (6) zwischen zwei Würste (5) zumindest eine in ihrem vertikalen Längsschnitt zumindest teilweise keilförmig ausgebildete Kulissenwand (10) und eine zweite in ihrem vertikalen Längsschnitt zumindest teilweise keilförmig ausgebildete Kulissenwand (11) eingeschoben wird und zumindest die eine Kulissenwand (10,11) gegenüber der anderen Kulissenwand (11,10) oder beide Kulissenwände gegeneinander keilförmig anstellbar ist/sind.

2. Verfahren nach Anspruch 1, **dadurch gekennzeichnet, dass** die Kulissenwand (10,11) einen Abstand (a) der beiden Würste (5) voneinander vergrößert und beim Einschieben in den Bereich der Verbindung (6) zwischen zwei Würsten (5) zumindest einen Teil der Verbindung (6) in einer Ausnehmung (13) aufnimmt.

3. Verfahren nach Anspruch 2, **dadurch gekennzeichnet, dass** beide Kulissenwände (10,11) einen Spalt (25) zwischen sich ausbilden, der zum Durchtrennen der Verbindung von einem Trennelement (15) durchfahren wird, wobei die Weite des Spaltes (25) bevorzugt veränderbar ist.

4. Verfahren nach wenigstens einem der vorhergehenden Ansprüche, **dadurch gekennzeichnet, dass** die Position der Verbindung (6) zwischen zwei Würsten (5) überwacht und entsprechend das Einschieben der zumindest einen Kulissenwand (10,11) gesteuert wird.

5. Vorrichtung zum Trennen von Würsten (5) von einem Wurststrang (1), an dem einzelne Würste (5) miteinander über eine durchtrennbare Verbindung (6) verbunden sind, wobei vor dem Durchtrennen in den Bereich der Verbindung (6) zwischen zwei Würste (5) zumindest eine Kulissenwand (10,11) einschiebbar ist, **dadurch gekennzeichnet, dass** der einen Kulissenwand (10) eine zweite Kulissenwand (11) zugeordnet ist, wobei die Kulissenwand (10,11) in ihrem vertikalen Längsschnitt zumindest teilweise keilförmig ausgebildet ist und zumindest die eine Kulissenwand (10,11) gegenüber der anderen Kulissenwand (11,10) oder beide Kulissenwände gegeneinander keilförmig angestellt ist/sind.

6. Vorrichtung nach Anspruch 5, **dadurch gekennzeichnet, dass** die Kulissenwand (10,11) von ihrer Stirnkante (12) ausgehend eine Ausnehmung (13) aufweist, welche beim Einschieben der Kulissenwand (10,11) in den Bereich der Verbindung (6) zwischen zwei Würsten (5) der Aufnahme dieser Verbindung (6) dient.

7. Vorrichtung nach einem der Ansprüche 5 oder 6, **dadurch gekennzeichnet, dass** der Kulissenwand (10,11) ein Trennelement (15) zum Durchtrennen der Verbindung (6) zwischen den beiden Würsten (5) zugeordnet ist.

8. Vorrichtung nach Anspruch 7, **dadurch gekennzeichnet, dass** das Trennelement zumindest ein drehbares Sichelmesser (15) aufweist.

9. Vorrichtung nach wenigstens einem der Ansprüche 5 bis 8, **dadurch gekennzeichnet, dass** der Kulissenwand eine Hubeinrichtung zugeordnet ist.

10. Vorrichtung nach Anspruch 9, **dadurch gekennzeichnet, dass** die Hubeinrichtung (14) mit einer Sensoreinrichtung zum Erkennen der Verbindung zwischen den beiden Würsten (5) verbunden ist.

11. Vorrichtung nach wenigstens einem der Anspruch 5 bis 10, **dadurch gekennzeichnet, dass** die beiden Kulissenwände (10,11) zwischen sich einen Spalt (25) ausbilden, in dem das Trennelement (15) bewegbar angeordnet ist.

## Claims

1. Method for separating sausages (5) from a sausage strand (1), at which individual sausages (5) are connected to one another via a connection (6) and this connection (6) is severed,
**characterized in**
**that**, prior to severing, at least one link wall (10), which is at least partially wedge-shaped in its vertical longitudinal section, and a second link wall (11), which is at least partially wedge-shaped in its vertical longitudinal section, are inserted into the area of the connection (6) between two sausages (5), and at least one link wall (10, 11) is/are adjustable relative to the other link wall (11, 10) or both link walls are adjustable relative to each other in a wedge-shaped manner.

2. Method according to claim 1, **characterized in that** the link wall (10,11) enlarges a distance (a) between the two sausages (5) from each other and receives at least some of the connection (6) in a recess (13) when inserted into the area of the connection (6) between two sausages (5).

3. Method according to claim 2, **characterized in that** both link walls (10,11) form a gap (25) between them, which is traversed by a separating element (15) for severing the connection, wherein the width of the gap (25) is preferably variable.

4. Method according to at least one of the preceding claims, **characterized in that** the position of the connection (6) between two sausages (5) is monitored and the insertion of the at least one link wall (10, 11) is controlled accordingly.

5. Device for separating sausages (5) from a sausage strand (1), on which individual sausages (5) are connected to one another via a severable connection (6), wherein at least one link wall (10, 11) can be inserted into the area of the connection (6) between two sausages (5) before the sausages are severed, **characterized in that** that a second link wall (11) is assigned to the one link wall (10), wherein the link wall (10, 11) is at least partially wedge-shaped in its vertical longitudinal section and at least the one link wall (10, 11) is/are wedge-shaped relative to the other link wall (11, 10) or both link walls are adjusted relative to each other.

6. Device according to claim 5, **characterized in that** the link wall (10, 11) has, starting from its front edge (12), a recess (13) which, when the link wall (10, 11) is inserted into the area of the connection (6) between two sausages (5), serves to receive this connection (6).

7. Device according to one of the claims 5 or 6, **characterized in that** the link wall (10, 11) is assigned a separating element (15) for severing the connection (6) between the two sausages (5).

8. Device according to claim 7, **characterized in that** the separating element comprises at least one rotatable sickle knife (15).

9. Device according to at least one of the claims 5 to 8, **characterized in that** a lifting device is assigned to the link wall.

10. Device according to claim 9, **characterized in that** the lifting device (14) is connected to a sensor device for detecting the connection between the two sausages (5).

11. Device according to at least one of the claims 5 to 10, **characterized in that** the two link walls (10, 11) form a gap (25) between them in which the separating element (15) is movably situated.

## Revendications

1. Procédé permettant de séparer des saucisses (5) d'un chapelet de saucisses (1) sur lequel des saucisses (5) individuelles sont reliées entre elles par l'intermédiaire d'une liaison (6) et ladite liaison (6) est sectionnée,
**caractérisé en ce que**
avant le sectionnement, au moins une paroi de coulisse (10) réalisée au moins partiellement en forme de coin dans sa section longitudinale verticale et une seconde paroi de coulisse (11) réalisée au moins partiellement en forme de coin dans sa section longitudinale verticale sont insérées dans la zone de la liaison (6) entre deux saucisses (5) et au moins une paroi de coulisse (10, 11) peut être mise en place en forme de coin par rapport à l'autre paroi de coulisse (11,10) ou les deux parois de coulisse peuvent être mises en place en forme de coin l'une contre l'autre.

2. Procédé selon la revendication 1, **caractérisé en ce que** la paroi de coulisse (10, 11) augmente une distance (a) entre les deux saucisses (5) et reçoit, lors de l'insertion dans la zone de la liaison (6) entre deux saucisses (5), au moins une partie de la liaison (6) dans un évidement (13).

3. Procédé selon la revendication 2, **caractérisé en ce que** les deux parois de coulisse (10, 11) forment entre elles une fente (25) qui est traversée par un élément de séparation (15) pour le sectionnement de la liaison, dans lequel la largeur de la fente (25) est de préférence variable.

4. Procédé selon au moins l'une des revendications précédentes, **caractérisé en ce que** la position de la liaison (6) entre deux saucisses (5) est surveillée et l'insertion de l'au moins une paroi de coulisse (10,11) est commandée en conséquence.

5. Dispositif permettant de séparer des saucisses (5) d'un chapelet de saucisses (1) sur lequel des saucisses (5) individuelles sont reliées entre elles par l'intermédiaire d'une liaison (6) pouvant être sectionnée, dans lequel, avant le sectionnement, au moins une paroi de coulisse (10, 11) peut être insérée dans la zone de la liaison (6) entre deux saucisses (5), **caractérisé en ce qu'**une seconde paroi de coulisse (11) est associée à la paroi de coulisse (10), dans lequel la paroi de coulisse (10, 11) est réalisée au moins partiellement en forme de coin dans sa section longitudinale verticale et au moins une paroi de coulisse (10,11) est mise en place en forme de coin par rapport à l'autre paroi de coulisse (11,10) ou les deux parois de coulisse sont mises en place en forme de coin l'une contre l'autre.

6. Dispositif selon la revendication 5, **caractérisé en ce que** la paroi de coulisse (10,11) présente, à partir de son bord frontal (12), un évidement (13) qui, lors de l'insertion de la paroi de coulisse (10,11) dans la zone de la liaison (6) entre deux saucisses (5), sert à recevoir ladite liaison (6).

7. Dispositif selon l'une des revendications 5 ou 6, **caractérisé en ce qu'**un élément de séparation (15) permettant de sectionner la liaison (6) entre les deux saucisses (5) est associé à la paroi de coulisse (10,11).

8. Dispositif selon la revendication 7, **caractérisé en ce que** l'élément de séparation présente au moins une lame de coupe (15) pouvant pivoter.

9. Dispositif selon au moins l'une des revendications 5 à 8,
**caractérisé en ce qu'**un appareil de levage est associé à la paroi de coulisse.

10. Dispositif selon la revendication 9, **caractérisé en ce que** l'appareil de levage (14) est relié à un appareil formant capteur pour la détection de la liaison entre les deux saucisses (5).

11. Dispositif selon au moins l'une de la revendication 5 à 10,
**caractérisé en ce que** les deux parois de coulisse (10, 11) forment entre elles une fente (25) dans laquelle l'élément de séparation (15) est disposé de manière à pouvoir se déplacer.
